**Europäisches Patentamt**

**European Patent Office**

**Office européen des brevets**

(19)

(11)  **EP 1 203 694 A2**

(12)  **EUROPÄISCHE PATENTANMELDUNG**

(43) Veröffentlichungstag:
     **08.05.2002  Patentblatt 2002/19**

(51) Int Cl.⁷: **B60Q 1/115**, B60Q 1/08

(21) Anmeldenummer: **01125954.6**

(22) Anmeldetag: **31.10.2001**

(84) Benannte Vertragsstaaten:
     **AT BE CH CY DE DK ES FI FR GB GR IE IT LI LU
     MC NL PT SE TR**
     Benannte Erstreckungsstaaten:
     **AL LT LV MK RO SI**

(30) Priorität: **04.11.2000  DE 10054614**

(71) Anmelder: **Hella KG Hueck & Co.**
     **59552 Lippstadt (DE)**

(72) Erfinder:
     • **Höver, Norber**
       **59555 Lippstadt (DE)**
     • **Schellmann, Michael**
       **59872 Meschede (DE)**

(54)  **Einrichtung und Verfahren zur Regelung der Leuchtweite von Scheinwerfern und Kraftfahrzeugen**

(57)     Einrichtung zur Regelung der Leuchtweite von Scheinwerfern (3) eines Kraftfahrzeugs (1) umfassend mindestens eine Sendeeinheit (4), von der mindestens ein erster Strahl (7, 8) ausgesandt werden kann, der in mindestens einem Bereich vor dem Kraftfahrzeug (1) auf die Fahrbahn (9) auftrifft, wobei die von diesem Bereich rückgestrahlte Strahlung von einer ebenfalls von der Einrichtung umfassten Sensoreinheit (5) erfasst werden kann, wobei die Einrichtung weiterhin eine Auswerteeinheit und Verstellmittel umfasst, wobei die Auswerteeinheit anhand der von der Sensoreinheit (5) erfassten rückgestreuten Strahlung die Lage des bestrahlten Bereichs mit einer einer gewünschten Einstellung der Leuchtweite des oder der Scheinwerfer (3) entsprechenden Solllage vergleichen und bei vorhandener Abweichung die Verstellmittel dazu veranlassen kann, die Leuchtweite der Scheinwerfer entsprechend zu verstellen, wobei die Einrichtung Plausibilitätsüberprüfungsmittel umfasst, die vor dem Kraftfahrzeug (1) befindliche Hindernisse erfassen können und bei einem in einem vorgegebenen Bereich vor dem Kraftfahrzeug (1) erfassten Hindernis die Auswerteeinheit dazu veranlassen können, aufgrund der von der Sensoreinheit (5) erfassten rückgestreuten Strahlung des mindestens einen ersten Strahls (7, 8) die Verstellmittel nicht zur Verstellung der Leuchtweite des oder der Scheinwerfer (3) zu veranlassen.

Fig.1

## Beschreibung

Die vorliegende Erfindung betrifft eine Einrichtung und ein Verfahren zur Regelung der Leuchtweite von Scheinwerfern eines Kraftfahrzeugs, wobei die Einrichtung mindestens eine Sendeeinheit umfasst, von der mindestens ein erster Strahl ausgesandt werden kann, der in mindestens einem Bereich vor dem Kraftfahrzeug auf die Fahrbahn auftrifft, wobei die von diesem Bereich rückgestrahlte Strahlung von einer ebenfalls von der Einrichtung umfassten Sensoreinheit erfasst werden kann, wobei die Einrichtung weiterhin eine Auswerteeinheit und Verstellmittel umfasst, wobei die Auswerteeinheit anhand der von der Sensoreinheit erfassten rückgestreuten Strahlung die Lage des bestrahlten Bereichs mit einer einer gewünschten Einstellung der Leuchtweite des oder der Scheinwerfer entsprechenden Solllage vergleichen und bei vorhandener Abweichung die Verstellmittel dazu veranlassen kann, die Leuchtweite der Scheinwerfer entsprechend zu verstellen.

Eine Einrichtung und ein Verfahren der vorgenannten Art sind aus der europäischen Patentanmeldung EP 0 858 931 A2 bekannt. Bei der darin beschriebenen Einrichtung ist in einem Scheinwerfer eines Kraftfahrzeuges eine Sensoreinrichtung angeordnet, die zwei Strahlen, beispielsweise zwei Laserstrahlen aussenden kann, die in unterschiedlichen Abständen von der Vorderfront des Kraftfahrzeugs auf die Fahrbahn auftreffen. Von den Auftreffpunkten dieser beiden Strahlen wird Strahlung zurückgestrahlt, die von der Sensoreinrichtung erfasst und von einer mit dieser verbundenen Auswerteeinrichtung ausgewertet werden kann. Aus den dabei erfassten Informationen können die Strahllängen der ausgesandten Strahlen berechnet werden. Diese berechneten Strahllängen werden mit Strahllängen verglichen, die einer korrekten Einstellung der Leuchtweite des jeweiligen Scheinwerfers entsprechen. Bei einer Abweichung der ermittelten Strahllängen von den Solllängen der Strahlen werden Verstellmittel dazu veranlasst, die Leuchtweite entsprechend zu korrigieren.

Als nachteilig bei einer derartigen Einrichtung und einem derartigen Verfahren erweist sich die Tatsache, dass vor dem Kraftfahrzeug befindliche Hindernisse oder vorausfahrende Fahrzeuge genau dann zu einer fehlerhaften Einstellung der Leuchtweite führen, wenn einer der beiden Strahlen vor seinem Auftreffen auf den ihm zugedachten Bereich der Fahrbahn auf das entsprechende Hindernis oder das entsprechende vorausfahrende Fahrzeug auftrifft. Dann wird nämlich die Länge dieses von dem Hindernis oder von dem vorausfahrenden Fahrzeug teilweise zurückreflektierten Strahl kürzer sein als sie es bei Auftreffen dieses Strahls auf den entsprechenden Bodenbereich wäre. Damit wird aber von der Auswerteeinheit ein Ergebnis ermittelt, das unter Umständen einer drastischen Schrägstellung des Kraftfahrzeuges entsprechen könnte, so dass die Verstellmittel dazu veranlasst werden, die Leuchtweite beträchtlich zu korrigieren, ohne dass dazu ein durch Schrägstellung des Fahrzeuges bedingter Anlass gegeben wäre. Die Reflektion eines der beiden Strahlen an einem Hindernis oder einem vorausfahrenden Fahrzeug führt somit unter Umständen zu einer extremen Fehleinstellung der Leuchtweite des Kraftfahrzeuges, was zu Sichtbehinderungen anderer Verkehrsteilnehmer oder des Fahrers des Kraftfahrzeuges führen kann.

Das der vorliegenden Erfindung zugrundeliegende Problem ist die Schaffung einer Einrichtung und eines Verfahrens der eingangs genannten Art, bei der bzw. bei dem vor dem Kraftfahrzeug befindliche Hindernisse oder vorausfahrende Fahrzeuge nicht zu einer Fehleinstellung der Leuchtweite der Scheinwerfer führen.

Eine dieses Problem lösende Einrichtung wird erfindungsgemäß durch die kennzeichnenden Merkmale des Anspruchs 1 gegeben. Ein dieses Problem lösendes Verfahren wird erfindungsgemäß durch die kennzeichnenden Merkmale des Anspruchs 6 gegeben.

Bei der erfindungsgemäßen Einrichtung gemäß Anspruch 1 ist vorgesehen, dass die Einrichtung Plausibilitätsüberprüfungsmittel umfasst, die vor dem Kraftfahrzeug befindliche Hindernisse erfassen können und bei einem in einem vorgegebenen Bereich vor dem Kraftfahrzeug erfassten Hindernis die Auswerteeinheit dazu veranlassen können, aufgrund der von der Sensoreinheit erfassten rückgestreuten Strahlung des mindestens einen ersten Strahls die Verstellmittel nicht zur Verstellung der Leuchtweite des oder der Scheinwerfer zu veranlassen. Das Vorsehen von Plausibilitätsüberprüfungsmitteln gewährleistet bei vor dem Fahrzeug befindlichen Hindernissen oder bei dem Vorhandensein vorausfahrender oder entgegenkommender Fahrzeuge eine Vermeidung von Fehleinstellungen der Leuchtweite, weil genau dann, wenn das vorausfahrende Kraftfahrzeug oder das vor dem Kraftfahrzeug befindliche Hindernis die Aussendung der Strahlen bzw. die Erfassung der rückgestreuten Strahlung stören könnte, auf eine Ansteuerung der Verstellmittel zur Verstellung der Leuchtweite verzichtet wird. Es wird somit genau dann, wenn die Nichtplausibilität der von der Sensoreinheit aus der rückgestreuten Strahlung entnommenen Informationen festgestellt wird, auf eine Verstellung der Leuchtweite so lange verzichtet, bis die Plausibilitätsüberprüfungsmittel die aus der erfassten rückgestreuten Strahlung entnommenen Informationen als plausibel einstufen.

Gemäß einer bevorzugten Ausführungsform der vorliegenden Erfindung umfassen die Plausibilitätsüberprüfungsmittel einen zweiten Strahl, der von der Sendeeinheit oder einer anderen entsprechenden Sendeeinheit unter einem flacheren Winkel zur Horizontalen als dem zwischen der Horizontalen und dem mindesten einen ersten Strahl ausgesendet werden kann, wobei die von einem vor dem Fahrzeug befindlichen Hindernis zurückgestrahlte Strahlung des zweiten Strahles von der Sensoreinheit oder einer weiteren Sensoreinheit erfasst und zur Plausibilitätsüberprüfung verwendet werden kann. Gemäß dem erfindungsgemäßen Verfahren können hierbei der mindestens eine erste Strahl und ein zweiter Strahl ausgesendet werden, wobei weiterhin die Längen der ersten und zweiten Strahlen miteinander verglichen werden und wobei weiterhin genau dann von der Auswerteeinheit die Plausibilität der aus der rückgestreuten Strahlung entnommenen Informationen angenommen wird, wenn die Länge des zweiten Strahls größer als die Länge des mindestens einen ersten Strahls bzw. des längsten der ersten Strahlen ist. Auf diese Weise kann relativ einfach durch Verwendung eines zweiten Strahles eine Plausibilitätsüberprüfung der aus der zurückgestrahlten bzw. zurückgestreuten Strahlung entnommenen Informationen vorgenommen werden.

Bei dem erfindungsgemäßen Verfahren kann weiterhin vorgesehen sein, dass bei Feststellung der Plausibilität der aus der rückgestreuten Strahlung entnommenen Informationen die Auswerteeinheit bei festgestellter Abweichung die Feststellmittel dazu veranlasst, die Leuchtweite der Scheinwerfer entsprechend zu verstellen, und das weiterhin bei Feststellung der Nichtplausibilität der aus der rückgestreuten Strahlung entnommenen Informationen die Verstellmittel im Ist-Zustand verbleiben. Falls dieser Zustand der Nichtplausibilität längere Zeit andauert, kann vorgesehen sein, dass die Verstellmittel die Scheinwerfer in eine Sicherheitsposition überführen, in der eine Behinderung des entgegenkommenden Verkehrs ausgeschlossen ist.

Die erfindungsgemäße Einrichtung kann derart ausgestaltet sein, dass von der Sendeeinheit zwei erste Strahlen ausgesandt werden können, die in zwei unterschiedlich weit von dem Kraftfahrzeug entfernten Bereichen auf die Fahrbahn auftreffen, wobei die von diesen unterschiedlich weit von dem Kraftfahrzeug entfernten Bereichen rückgestrahlte Strahlung von der Sensoreinheit erfasst und von der Auswerteeinheit ausgewertet werden kann. Durch die Verwendung zweier erster Strahlen lassen sich aus der zurückgestrahlten Strahlung einfacher die für die Kennung der Abweichung von einem vorgegebenen Sollwert notwendigen Informationen extrahieren. Weiterhin kann auch die Plausibilitätsüberprüfung bei der Verwendung zweier erster Strahlen dadurch verfeinert werden, dass die Auswerteeinheit aus der rückgestrahlten Strahlung den Winkel zwischen den beiden ersten Strahlen bestimmt und diesen Winkel mit einem vorbekannten durch den Einbau der Sendeeinheit gegebenen Winkel zwischen den beiden ersten Strahlen vergleicht, wobei die Auswerteeinheit nur bei relativ guter Übereinstimmung zwischen diesen beiden Winkeln die aus der rückgestrahlten Strahlung entnommenen Informationen als plausibel einstuft.

Vorteilhafterweise sind die Sendeeinheit und die Sensoreinheit so an einem Reflektor eines oder beider Scheinwerfer des Kraftfahrzeugs angebracht, dass eine starre Kopplung der ersten und zweiten Strahlen zu dem von dem oder den Scheinwerfern ausgesendeten Licht besteht. Auf diese Weise ergibt sich ein einfacher Zusammenhang zwischen den aus der zurückgestrahlten Strahlung entnommenen Informationen und der aktuellen Leuchtweiteeinstellung der Scheinwerfer des Kraftfahrzeugs.

Es erweist sich als vorteilhaft, wenn die Auswerteeinheit dann die aus der zurückgestrahlten Strahlung entnommenen Informationen als plausibel einstuft, wenn die Länge des zweiten Strahls groß gegenüber der Länge des mindesten einen ersten Strahls bzw. gegenüber der Länge des längsten der ersten Strahlen ist. Hierbei kann die Auswerteeinheit dann die aus der rückgestrahlten Strahlung entnommenen Informationen als plausibel einstufen, wenn die Längen $e6$, $e7$, $e8$ des zweiten Strahls und der ersten Strahlen folgender Bedingung genügen:

$$e6 \gg e7 \gg e8.$$

Zur Ermittlung dieser Strahllängen kann die Sendeeinheit beispielsweise in vorgegebenen Zeitabständen Laserimpulse aussenden, deren Rückstrahlung dann von der Sensoreinheit erfasst und von der Auswerteeinheit ausgewertet werden kann. Die Laserstrahlen können beispielsweise Infrarotlaserstrahlen sein. Es besteht jedoch auch die Möglichkeit, anstelle von sichtbaren oder Infrarotlasern Mikrowellenstrahler oder dergleichen zu verwenden. Auch die Verwendung von Ultraschallquellen als Strahlquellen kommt in Betracht.

Erfindungsgemäß besteht weiterhin die Möglichkeit, dass der zweite Strahl Bestandteil eines Abstandssensorsystems ist und somit gleichzeitig zur Ermittlung des Abstandes zu einem vorausfahrenden Fahrzeug verwendet werden kann. Auf diese Weise kann mit einfachen Mitteln die Leuchtweiteregelung mit der Abstandsüberwachung des Kraftfahrzeugs verknüpft werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

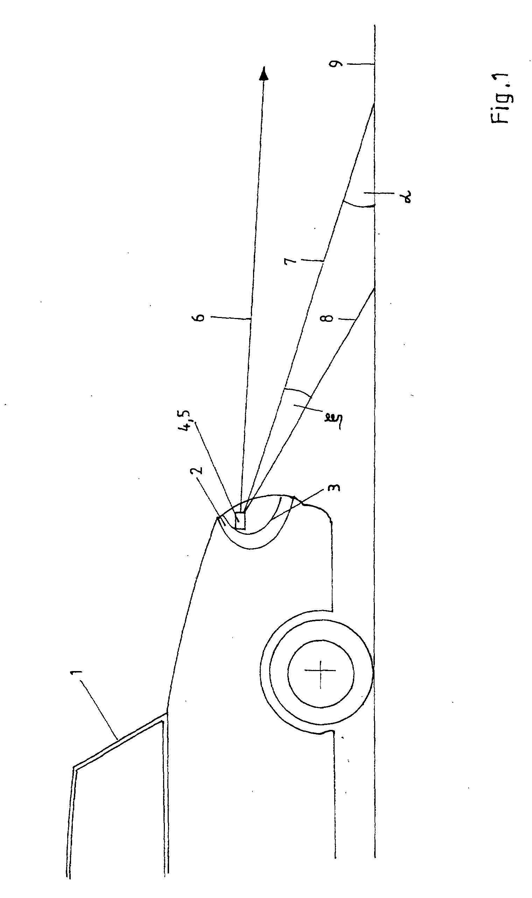

Fig. 1    eine schematische Seitenansicht eines Vorderteiles eines Kraftfahrzeugs mit einer erfindungsgemäßen Einrichtung zur Regelung der Leuchtweite.

Aus Fig. 1 ist schematisch das Vorderteil eines Kraftfahrzeugs 1 ersichtlich sowie daran angebrachte Scheinwerfer 2. In dem schematisch angedeuteten Reflektor 3 des Scheinwerfers 2 sind eine Sendeeinheit 4 und eine Sensoreinheit 5 eingebaut, die im abgebildeten Ausführungsbeispiel in einem gemeinsamen Gehäuse zusammengefasst sind. Es besteht erfindungsgemäß jedoch durchaus auch die Möglichkeit, die Sendeeinheit 4 und die Sensoreinheit 5 getrennt im Bereich der Vorderfront des Kraftfahrzeuges 1, insbesondere in dem Reflektor 3 eines oder beider Scheinwerfer 2 vorzusehen.

Von der Sendeeinheit 4 werden in dem abgebildeten Ausführungsbeispiel drei Strahlen 6, 7, 8 ausgesandt. Es kann sich bei den Strahlen 6, 7, 8 um Laserstrahlen des optischen oder infraroten Spektralbereichs handeln. Es besteht jedoch auch die Möglichkeit, dass es sich um elektromagnetische Wellen eines anderen Bereichs, beispielsweise des Mikrowellenbereichs handelt.

Die Strahlen 7 und 8 treffen vor dem Kraftfahrzeug 1 in unterschiedlichen Abständen von der Vorderfront des Kraftfahrzeuges 1 auf die im abgebildeten Ausführungsbeispiel horizontal ausgerichtete Fahrbahn 9 auf. Dabei sollen die Strahlen 7 und 8 jeweils einen eng begrenzten Bereich der Fahrbahn 9 ausleuchten, so dass das von diesem eng begrenzten Bereich reflektierte bzw. gestreute Licht von der Sensoreinheit 5 detektiert und an eine nicht abgebildete Auswerteeinheit weitergegeben werden kann. Die Auswerteeinheit kann Verstellmittel für die Verstellung der Leuchtweite ansteuern. Die Auswerteeinheit kann aus den von der Sensoreinheit 5 aufgenommenen Rückstreukurven die Längen e7 und e8 der Strahlen 7 und 8 ermitteln. Aus diesen Längen e7 und e8 der Strahlen 7 und 8 kann die Auswerteeinheit den Neigungswinkel des Scheinwerfers 2 gegenüber der Horizontalen berechnen. Hierzu sind die Sendeeinheit 4 und vorzugsweise auch die Sensoreinheit 5 so an dem Reflektor 3 angebracht, dass eine starre Kopplung der ausgesandten Strahlen 6, 7, 8 zu dem von dem Scheinwerfer 2 ausgesendeten Licht besteht, wobei durch eine Stellbewegung der von der Auswerteeinheit gesteuerten Verstellmittel der Leuchtweite auch die Strahllängen e7 und e8 verändert werden.

In Fig. 1 sind weiterhin der Winkel $\alpha$ zwischen der als Horizontalen anzusehenden Fahrbahn 9 und dem Strahl 7 sowie der Winkel $\xi$ zwischen dem Strahl 7 und dem Strahl 8 eingezeichnet. Dabei ergibt sich der Winkel $\alpha$ zwischen dem mittleren Strahl 7 und der Horizontalen gemäß folgender Formel.

$$\alpha = a\tan\left[\frac{\left(e8 \times \sin\left(\xi\right)\right)}{\left(e7 - e8 \times \cos\left(\xi\right)\right)}\right]$$

Hierbei ist bemerkenswert, daß der Winkel $\alpha$ nicht von der Einbauhöhe der Sendeeinheit 4 bzw. der Sensoreinheit 5 in dem Kraftfahrzeug abhängt. Das bedeutet, dass eine Paralleleinfederung des Kraftfahrzeuges 1 nicht zu einer Stellbewegung des Scheinwerfers 2 führt.

Der dritte in Fig. 1 eingezeichnete Strahl 6 dient zur Plausibilitätsüberprüfung der von der Sensoreinheit 5 empfangenen Signale. Für den Fall, dass vor dem Kraftfahrzeug 1 keine Hindernisse oder dicht vorausfahrende Fahrzeuge innerhalb der Fahrspur des Kraftfahrzeuges 1 vorhanden sind, müssen die Strahllängen folgender Bedingung gehorchen:

$$e6 \gg e7 \gg e8.$$

Hierbei bedeutet e6 die Länge des Strahls 6. Falls beispielsweise direkt vor dem Fahrzeug ein Hindernis ist, wird die voranstehende Bedingung nicht mehr erfüllt sein. In diesem Fall werden die von der Sensoreinheit 5 empfangenen Signale als unplausibel eingestuft, so dass darauf hin von der Auswerteeinheit die Verstellmittel der Leuchtweite derart angesteuert werden, dass der momentane Istwert der Leuchtweite eingefroren wird. Hierbei kann vorgesehen sein, dass bei Andauer dieser Unplausibilität über einen längeren Zeitraum der Scheinwerfer in eine Position gebracht wird, die einer Sicherheitsposition entspricht.

Als zusätzliches Plausibilitätskriterium kann der Winkel $\xi$ zwischen den Strahlen 7 und 8 dienen. Dieser Winkel $\xi$ kann aus den von der Sensoreinheit 5 empfangenen Signalen zurückgerechnet werden. Dieser berechnete Wert sollte innerhalb eines sehr kleinen Toleranzfensters zum vorbekannten durch den Einbau gegebenen Winkel zwischen den Strahlen 7 und 8 liegen.

Falls von der Auswerteeinheit Plausibilität festgestellt wird, wird der aktuelle Winkel $\alpha$ berechnet. Dieser Winkel $\alpha$ wird mit einem voreingestellten Sollwert verglichen. Bei Feststellung einer Abweichung werden von der Auswerteeinheit entsprechend die Verstellmittel der Leuchtweite angesteuert und entsprechend die Leuchtweite nachgeregelt.

Erfindungsgemäß besteht auch die Möglichkeit, dass der Strahl 6 Bestandteil eines Abstandsensorsystems ist und somit gleichzeitig zur Ermittlung des Abstandes zu einem vorausfahrenden Fahrzeug verwendet werden kann.

**Patentansprüche**

1. Einrichtung zur Regelung der Leuchtweite von Scheinwerfern (3) eines Kraftfahrzeugs (1) umfassend mindestens eine Sendeeinheit (4), von der mindestens ein erster Strahl (7, 8) ausgesandt werden kann, der in mindestens einem Bereich vor dem Kraftfahrzeug (1) auf die Fahrbahn (9) auftrifft, wobei die von diesem Bereich rückgestrahlte Strahlung von einer ebenfalls von der Einrichtung umfassten Sensoreinheit (5) erfasst werden kann, wobei die Einrichtung weiterhin eine Auswerteeinheit und Verstellmittel umfasst, wobei die Auswerteeinheit anhand der von der Sensoreinheit (5) erfassten rückgestreuten Strahlung die Lage des bestrahlten Bereichs mit einer einer gewünschten Einstellung der Leuchtweite des oder der Scheinwerfer (3) entsprechenden Solllage vergleichen und bei vorhandener Abweichung die Verstellmittel dazu veranlassen kann, die Leuchtweite der Scheinwerfer entsprechend zu verstellen, **dadurch gekennzeichnet, dass** die Einrichtung Plausibilitätsüberprüfungsmittel umfasst, die vor dem Kraftfahrzeug (1) befindliche Hindernisse erfassen können und bei einem in einem vorgegebenen Bereich vor dem Kraftfahrzeug (1) erfassten Hindernis die Auswerteeinheit dazu veranlassen können, aufgrund der von der Sensoreinheit (5) erfassten rückgestreuten Strahlung des mindestens einen ersten Strahls (7, 8) die Verstellmittel nicht zur Verstellung der Leuchtweite des oder der Scheinwerfer (3) zu veranlassen.

2. Einrichtung nach Anspruch 1, **dadurch gekennzeichnet, dass** die Plausibilitätsüberprüfungsmittel einen zweiten Strahl (6) umfassen, der von der Sendeeinheit (4) oder einer anderen entsprechenden Sendeeinheit unter einem flacheren Winkel zur Horizontalen als dem zwischen der Horizontalen und dem mindestens einen ersten Strahl (7, 8) ausgesendet werden kann, wobei die von einem vor dem Fahrzeug befindlichen Hindernis zurückgestrahlte Strahlung des zweiten Strahles (6) von der Sensoreinheit (5) oder einer weiteren Sensoreinheit erfasst und zur Plausibilitätsüberprüfung verwendet werden kann.

3. Einrichtung nach einem der Ansprüche 1 oder 2, **dadurch gekennzeichnet, dass** von der Sendeeinheit (4) zwei erste Strahlen (7, 8) ausgesandt werden können, die in zwei unterschiedlich weit von dem Kraftfahrzeug (1) entfernten Bereichen auf die Fahrbahn (9) auftreffen, wobei die von diesen unterschiedlich weit von dem Kraftfahrzeug (1) entfernten Bereichen rückgestrahlte Strahlung von der Sensoreinheit (5) erfasst und von der Auswerteeinheit ausgewertet werden kann.

4. Einrichtung nach einem der Ansprüche 1 bis 3, **dadurch gekennzeichnet, dass** die Sendeeinheit (4) und die Sensoreinheit (5) so an einem Reflektor (3) eines oder beider Scheinwerfer (2) des Kraftfahrzeugs (1) angebracht sind, dass eine starre Kopplung der ersten und zweiten Strahlen (6, 7, 8) zu dem von dem oder den Scheinwerfern (2) ausgesendeten Licht besteht.

5. Einrichtung nach einem der Ansprüche 1 bis 4, **dadurch gekennzeichnet, dass** die Auswerteeinheit anhand der rückgestrahlten Strahlung die Länge (e6, e7, e8) der ersten und zweiten Strahlen (6, 7, 8) ermitteln kann.

6. Verfahren zur Regelung der Leuchtweite von Scheinwerfern (2) eines Kraftfahrzeugs (1) vermittels einer Einrichtung nach einem der Ansprüche 1 bis 5, **dadurch gekennzeichnet, dass** mindestens ein erster Strahl (7, 8) und ein zweiter Strahl (6) ausgesendet werden, dass weiterhin die Längen (e6, e7, e8) der ersten und zweiten Strahlen (6, 7, 8) miteinander verglichen werden, und dass weiterhin genau dann von der Auswerteeinheit die Plausibilität der aus der rückgestreuten Strahlung entnommenen Information angenommen wird, wenn die Länge (e6) des zweiten Strahls (6) größer als die Länge (e7) des mindestens einen ersten Strahls (7, 8) bzw. des längsten der ersten Strahlen (7, 8) ist.

7. Verfahren nach Anspruch 6, **dadurch gekennzeichnet, dass** bei Feststellung der Plausibilität der aus der rückgestreuten Strahlung entnommenen Informationen die Auswerteeinheit bei festgestellter Abweichung die Verstellmittel dazu veranlasst, die Leuchtweite der Scheinwerfer (2) entsprechend zu verstellen, und dass bei Feststellung der Nichtplausibilität der aus der rückgestreuten Strahlung entnommenen Informationen die Verstellmittel im Ist-Zustand verbleiben.

8. Verfahren nach einem der Ansprüche 6 oder 7, **dadurch gekennzeichnet, dass** die Auswerteeinheit dann die aus der zurückgestrahlten Strahlung entnommenen Informationen als plausibel einstuft, wenn die Länge (e6) des zweiten Strahls (6) groß gegenüber der Länge (e7) des mindestens einen ersten Strahls (7) bzw. gegenüber der Länge (e7) des längsten der ersten Strahlen (7, 8) ist.

9. Verfahren nach einem der Ansprüche 6 bis 8, **dadurch gekennzeichnet, dass** die Auswerteeinheit dann die aus der rückgestrahlten Strahlung entnommenen Informationen als plausibel einstuft, wenn die Längen (e6, e7, e8) des zweiten Strahls (6) und der ersten Strahlen (7, 8) folgender Bedingung genügen:

$$e6 \gg e7 \gg e8.$$

10. Verfahren nach einem der Ansprüche 6 bis 9, **dadurch gekennzeichnet, dass** die Auswerteeinheit aus der rückgestrahlten Strahlung den Winkel ($\xi$) zwischen den beiden ersten Strahlen (7, 8) bestimmt und diesen Winkel ($\xi$) mit einem vorbekannten durch den Einbau der Sendeeinheit gegebenen Winkel zwischen den beiden ersten Strahlen (7, 8) vergleicht, wobei die Auswerteeinheit nur bei relativ guter Übereinstimmung zwischen diesen beiden Winkeln ($\xi$) die aus der rückgestrahlten Strahlung entnommenen Informationen als plausibel einstuft.

Fig.1